# EUROPEAN PATENT APPLICATION

(11) **EP 1 860 658 A2**
(43) Date of publication of application: **28.11.2007**
(21) Application number: 07103222.1
(22) Date of filing: 28.02.2007
(51) Int. Cl.: G11B 7/24

(54) **Recordable multilayer optical disk, recording method, reproducing method, and recording apparatus**

(30) Priority: 24.05.2006 JP 2006144495
(71) Applicant: Kabushiki Kaisha Toshiba, Tokyo 105-8001 (JP)
(72) Inventor: Nakamura, Naomasa Toshiba Corporation, Minato-ku Tokyo 105-8001 (JP); Ootera, Yasuaki Toshiba Corporation, Minato-ku Tokyo 105-8001 (JP); Morita, Seiji Toshiba Corporation, Minato-ku Tokyo 105-8001 (JP); Ando, Hideo Toshiba Corporation, Minato-ku Tokyo 105-8001 (JP); Morishita, Naoki Toshiba Corporation, Minato-ku Tokyo 105-8001 (JP); Takazawa, Koji Toshiba Corporation, Minato-ku Tokyo 105-8001 (JP); Umezawa, Kazuyo Toshiba Corporation, Minato-ku Tokyo 105-8001 (JP)
(74) Representative: Henkel, Feiler & Hänzel

(57) **Abstract**

For example, a recordable single-sided two-layer optical disk which is recorded into and reproduced from with light whose wavelength is 405 nm is so configured that, if the front layer (101) is an L0 layer (L0) and the inner layer (100) is an L1 layer (L1) when viewed from the light entrance surface (or the light-receiving surface), the absorbance of the L1 layer (L1) in the wavelength range of 600 to 800 nm is higher than that of the L0 layer (L0). In a part of the L1 layer (L1) whose absorbance to light in the range of 600 to 800 nm is high, an area (BCA) in which specific information on the optical disk (100) is to be recorded is provided.

## Description

One embodiment of the invention relates to a recordable optical disk with two or more recording layers per side. More particularly, this invention relates to a recordable multilayer optical disk which has a burst cutting area (BCA) recorded in an inner layer when viewed from the light-receiving surface.

Generally, a red laser with a wavelength of 600 to 800 nm is used in BAC recording. Since a next-generation optical disk (such as HD DVD) compatible with high-definition video recording is recorded into and reproduced from with a blue-based laser with a wavelength of about 405 nm, it normally has no recording sensitivity to light whose wavelength is 600 to 800 nm.

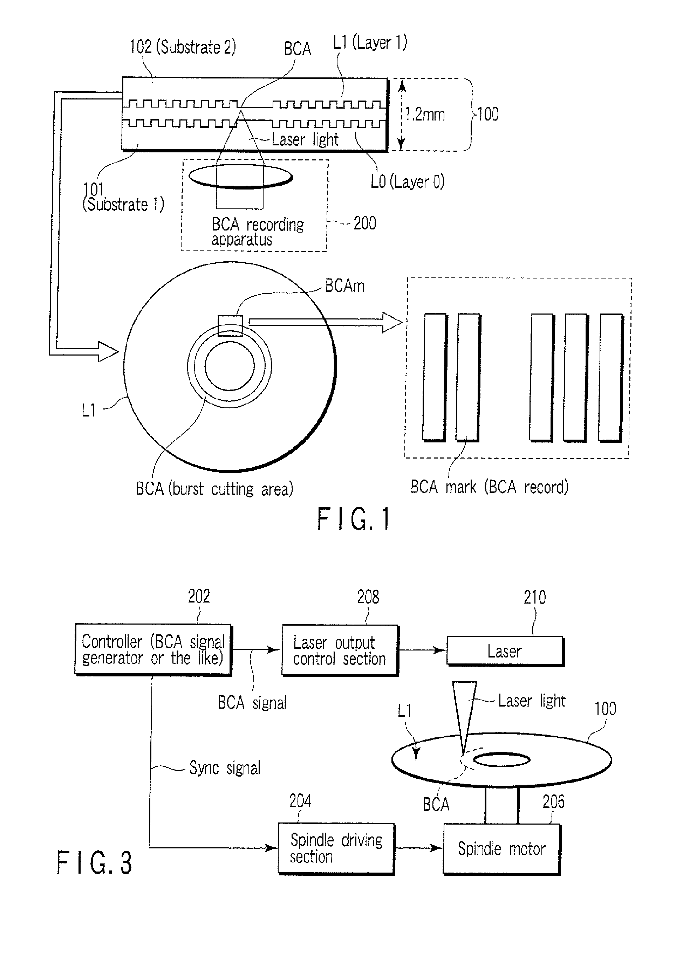

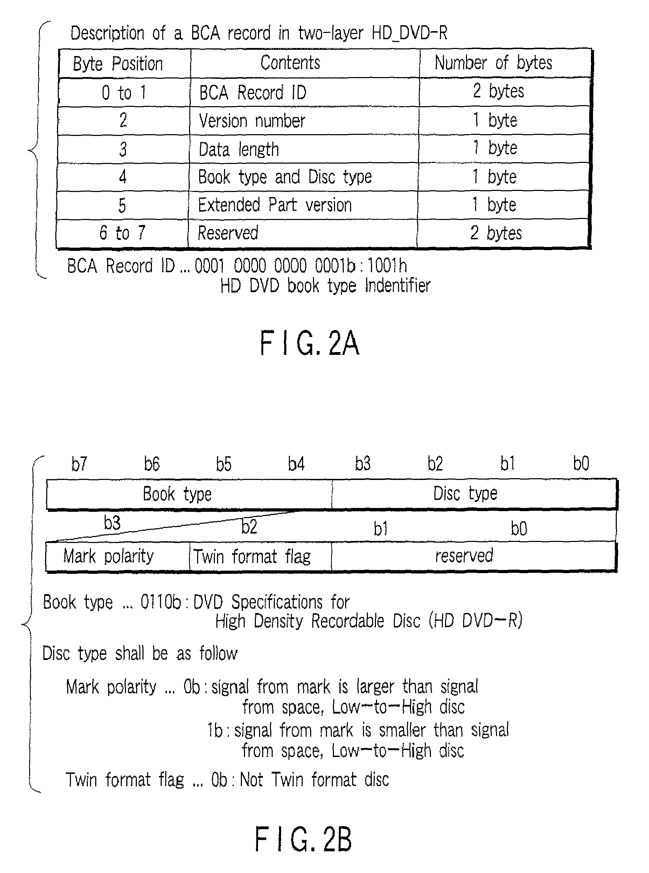

Jpn. Pat. Appln. KOKAI Publication No. 2005-4877 has disclosed a multilayer optical recording medium (see FIG. 2) made of a recording layer material (see FIG. 1) having a plurality of absorption wavelengths. A conventional example of recording and reproducing data into and from a multilayer recording layer with a plurality of different wavelengths has been written in the publication. Jpn. Pat. Appln. KOKAI Publication No. 2002-36726 has disclosed an optical recording medium which has a recording layer including a pigment whose absorption wavelength is in the range of 400 to 700 nm and of 750 to 850 nm to cause individual information areas to be recorded into and reproduced from efficiently in a short time (refer to the summary). Jpn. Pat. Appln. KOKAI Publication No. 2003-211847 has disclosed a recordable recording pigment whose recoding and reproducing wavelength is in the range of 300 to 500 nm, in the range of 500 to 700 nm, and/or in the range of 700 to 900 nm (refer to the summary). Jpn. Pat. Appln. KOKAI Publication No. 2006-48771 has disclosed an optical recording medium which enables both main information recording with a blue laser and BCA recording with a red laser (refer to the summary).

The multilayer optical recording medium in Jpn. Pat. Appln. KOKAI Publication No. 2005-4877 is characterized in that the pigments in all the layers can be recorded into with a plurality of wavelengths. What has been described as a conventional example in the document is a multilayer optical disk where the individual layers can be recorded into with different wavelengths. When BCA is recorded into the inner layer (L1 layer) of such a two-layer optical disk, if the front layer (L0) is sensitive to recording wavelengths, BCA information is also recorded into the front layer by mistake. This makes it impossible to correctly read BAC information recorded in the inner layer. The reason is that the BCA recoding apparatus records BCA information at a great focal depth with high power.

Jpn. Pat. Appln. KOKAI Publication No. 2003-211847 has suggested also a case where the recording layer is multilayer (the last line in paragraph 0043), but has shown no measures to cope with a problem in recording BCA into the inner layer (L1 layer) through the front layer (L0 layer) in the multilayer disk.

Jpn. Pat. Appln. KOKAI Publication No. 2002-36726, Jpn. Pat. Appln. KOKAI Publication No. 2003-211847, and Jpn. Pat. Appln. KOKAI Publication No. 2006-48771 have disclosed inventions related to a single-layer optical disk and therefore have no measures to cope with a problem in recording BCA into the inner layer (L1 layer) through the front layer (L0 layer).

An object of the invention is to make it possible to record a burst cutting area (BCA) capable of normal reading into the inner layer when viewed from the light-receiving surface in a recordable optical disk with two or more recording layer per side.

According to one aspect of the invention, there is provided a recordable multilayer optical disk where a plurality of recording layers are stacked one on top of another, each recording layer being recorded into and reproduced from with light whose wavelength is in the range from blue-violet to blue (450 nm or less, for example, 405 ± 15 nm). In the optical disk (100), if a front layer (101) is an L0 layer (L0) and an inner layer (102) is an L1 layer (L1) when viewed from the light entrance surface, the optical disk (100) is so configured that the absorbance of the L1 layer (L1) in the wavelength range of 600 to 800 nm (or 650 to 780 nm or 680 to 780 nm) is higher than that of the L0 layer (L0) .

Specifically, the L1 layer (L1) has a burst cutting area (BCA) in which specific information is recorded with light whose wavelength is in the range of 600 to 800 nm in an area closer to the inner edge of the disk (100) than a data area in which information is recorded with light whose wavelength is 450 nm or less. A first organic material (pigment) (306) having a high absorbance (or sensitivity) to a wavelength actually used of the light whose wavelength is in the range of 600 to 800 nm is used for the burst cutting area (BCA). A second organic material (pigment) (302) having a relatively low absorbance (sensitivity) to light whose wavelength is in the range of 600 to 800 nm is used for the L0 layer (L0) overlapping with the burst cutting area (BCA).

The invention can be more fully understood from the following detailed description when taken in conjunction with the accompanying drawings, in which:
FIG. 1 is a diagram to help explain the way a burst cutting area (BCA) is formed in an L1 layer of a recordable single-sided multilayer (two-layer) optical disk according to an embodiment of the invention;
FIGS. 2A and 2B are diagrams to help explain the contents of a BCA record recorded in the BCA of FIG. 1;
FIG. 3 is a diagram showing an example of the configuration of an apparatus which records specific information including the BCA record and others of FIG. 2 into BCA of FIG. 1;
FIG. 4 is a flowchart to help explain an example of the procedure for recording specific information (including BCA record) into the L1 layer of the recordable single-sided multilayer (two-layer) optical disk of FIG. 1;
FIG. 5 is a flowchart to help explain an example of the procedure for reproducing specific information (including BCA record) from the L1 layer of the recordable single-sided multilayer (two-layer) optical disk of FIG. 1;
FIG. 6 is a diagram to help explain an example of the process of manufacturing a recordable single-sided two-layer optical disk according to an embodiment of the invention;
FIG. 7 is a diagram to help explain the way a BCA pigment material for the L1 layer is obtained by mixing a suitable amount of CD-R/DVD-R pigment material into L0-layer pigment material (a diagram showing the relationship between the absorbance and wavelength of organic pigment material to be used for the L0 layer and L1 layer);
FIG. 8 shows a concrete example of a metal-complex part of the L0-layer organic material; and
FIGS. 9A, 9B, and 9C show concrete examples of pigment parts of the L0-layer organic material.

Various embodiments according to the invention will be described hereinafter with reference to the accompanying drawings. In general, according to one embodiment of the invention, in an optical disk where a plurality of recording layers are stacked one on top of another, each recording layer being recorded into and reproduced from with light whose wavelength is in the range from blue-violet to blue, a recordable multilayer optical disk configures that, if a front layer is an L0 layer and an inner layer is an L1 layer when viewed from the light entrance surface, the absorbance of the L1 layer in the wavelength range of 600 to 800 nm is higher than that of the L0 layer.

Hereinafter, referring to the accompanying drawings, embodiments of the invention will be explained. FIG. 1 is a diagram to help explain the way a burst cutting area (BCA) is formed in an L1 layer of a recordable single-sided multilayer (two-layer) optical disk according to an embodiment of the invention. An L0 layer is provided on a laser-light-receiving-side substrate 101. An L1 layer is provided so as to face the L0 layer. On the L1 layer, a substrate 102 is provided, thereby configuring a laminated two-layer disk 100 with a substrate thickness of 1.2 mm. On the L1 layer on the inner edge side of the disk 100, a BCA (Burst Cutting Area) in which information unique to the disk is recorded in the form of a bar-code pattern (or mark) is provided.

It is desirable that disk unique information should be recorded in advance in each optical disk in manufacturing disks. The disk unique information recorded at this time is used when each disk has to be identified in, for example, copy protection. In such an optical disk as CD, DVD, BD, or HD DVD, such disk unique information (including BCA records) is recorded into the disk inner periphery in advance in the form of a bar code pattern called BCA as shown in FIG. 1. At that time, if the disk is a reproduce-only two-layer optical disk, the inner layer when viewed from the entrance surface of the recording and reproducing light is generally recorded into.

To meet the request for higher-capacity optical disks, single-sided two-layer recording optical disks, not reproduce-only disks, have been developed in recent years. To secure compatibility with the reproduce-only type, it is desirable that even a recording two-layer disk should have the BCA signal recorded into the inner layer when viewed from the entrance plane of recording and reproducing light. To do this, there are several problems. Hereinafter, a method of recording BCA will be explained and problems arising in using a two-layer structure will be pointed out.

To provide BCA in a disk, there is a method of carving a pattern of BCA on a stamper serving as a mold in forming an optical disk. However, to record different pieces of unique information into individual disks one by one, it is necessary to carve a BCA pattern on a formed disk with, for example, laser light. Generally, when BCA is recorded onto a reproduce-only disk, the reflecting film (made of aluminum, silver, or their alloy) is burned out with laser light, thereby producing a pattern. Moreover, when BAC is recorded onto a phase-change recording disk, the reflectivity is changed by changing the phase of the recording film with laser light, thereby producing a pattern.

On the other hand, in the case of a recordable optical disk using organic pigment material, since the pigment is very sensitive to a wavelength, even if an existing BCA recording apparatus using laser light with a long wavelength (e.g., 650, 680, or 780 nm) is applied to a next-generation optical disk (e.g., BD or HD DVD) using pigment compatible with a short wavelength (e.g., 405 nm), a BCA pattern cannot be recorded satisfactorily. In this case, it is conceivable that the laser power of the BCA recording apparatus is increased or the laser wavelength of the BCA recording apparatus is changed according to the data recording wavelength (e.g., 405 nm). However, since BCA information is recorded into the inner layer (L1) through the front layer (L0), not only is the focal depth of the BCA recording apparatus very great (or BCA recording light is parallel), but also the pigment in the front layer also reacts in this method. This is ascribed to noise (or interlayer crosstalk signal) in reproducing the BCA signal.

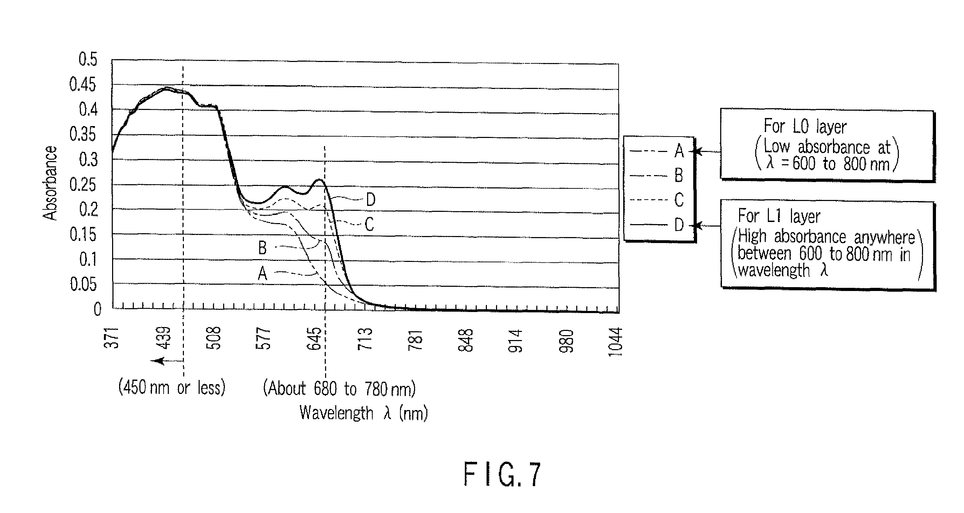

In the embodiment, to overcome this problem, if a wavelength used to record and reproduce data is A (nm) and the wavelength of the BCA recording apparatus is B (nm), pigment material to be used is so selected that the inner layer (L1) in which BCA is to be recorded has a higher recording sensitivity to the wavelength B than the front layer (L0) in which no BCA is recorded. While the wavelength used to record actual data (such as high-definition video data encoded in MPEG4-AVC or the like) is being kept different from the wavelength used to record BCA information (A ≠ B), pigment also compatible with the wavelength of the BCA recording apparatus is used only for the inner layer (L1) (for example, two types of pigments differing in sensitivity, such as pigment having sensitivity in the vicinity of 405 nm and pigment having sensitivity in the vicinity of 650 to 780 nm, are mixed), which makes it possible to selectively record the BCA signal only into the inner layer (L1). A practical example of the absorbance characteristic of pigment suitable for the inner layer (L1) in which BCA is recorded will be explained later with reference to FIG. 7.

The embodiment shows a recordable optical disk which has a diameter of 120 mm and a thickness of 1.2 mm (a lamination of two 0.6-mm-thick polycarbonate substrates) and which has two recording layers using organic pigment material. Suppose an optical system with a wavelength (λ) of 405 nm and a numerical aperture (NA) of 0.65 is used in recording and reproducing light. It is assumed that the track pitch between grooves in a data recording area is, for example, 400 nm, the position of a BCA area is, for example, in the range from 22.2 mm to 23.1 mm in radius. Moreover, a BCA pattern is composed of, for example, a bar-code-like pattern with a width of several tens of micrometers (in the tangential direction) and a length of several hundreds of micrometers (in the radial direction).

The invention is not limited to the above embodiment. For instance, an optical disk on whose surface a 0.1-mm-thick cover layer is provided or an optical disk with a diameter of 80 mm may be used. Moreover, a high-density track pitch pattern may be used. In addition, laser light with a short wavelength (e.g., λ is 400 nm or less) may be used. Furthermore, an optical system (objective) with a high numerical aperture (NA is, for example, 0.8 to 0.9) may be used.

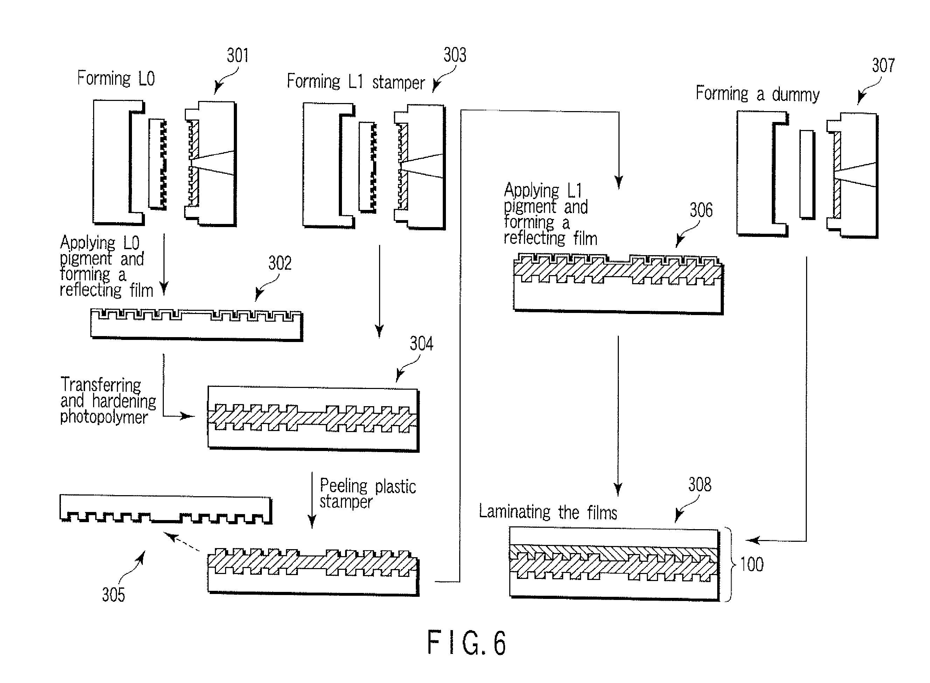

Concrete examples of materials of a recordable multilayer optical disk according to the embodiment may be as follows: a forming substrate is composed of polycarbonate; a stamper used for forming is composed of nickel (Ni); a recording layer is composed of organic pigment material of the azo series, diazo series, cyanine series, phthalocyanine series, styryl series, or a compound made up of these; a reflecting film is composed of silver (Ag), aluminum (Al), gold (Au), of a compound using these as a base; and an adhesive is composed of acrylic or epoxy ultraviolet curing resin. The invention is not limited to these materials. The invention relates to a recordable optical disk having a plurality of recording layers. In this connection, a method of manufacturing a typical single-sided, two-layer recordable optical disk will be explained later with reference to FIG. 6.

FIGS. 2A and 2B are diagrams to help explain the contents of a BCA record recorded in the BCA of FIG. 1. As shown in FIG. 2A, in the record, a BCA record ID (showing an HD DVD book type identifier) is written in relative byte positions 0 to 1, the version number of the standard used is written in relative byte position 2, a data length is written in relative byte position 3, the book type and disk type of the written standards are written in relative byte position 4, an extended part version is written in byte position 5, and relative byte positions 6 to 7 are reserved for writing other pieces of information.

Of the BCA record, the field of the book type and disk type of the written standards to which the disk conforms are as shown in FIG. 2B. Specifically, in the book type, information indicating the HD DVD-R standard can be written. In the disk type, a mark polarity flag and a twin format flag can be written.

When the mark polarity flag of FIG. 2B is at "0b," this indicates a "Low-to-High" disk where the signal from the recording mark is larger than the signal from a space (between adjacent marks). When the mark polarity flag is at "1b," this indicates a "High-to-Low" disk where the signal from the recording mark is smaller than the signal from the space. When the twin format flag is "0b," this indicates that the disk is not a twin format disk. When the twin format flag is "1b," this indicates that the disk is a twin format disk. When the disk is a twin format disk, the disk (in which the BAC record has been recorded) has two recording layers, each of which has a separate format determined in a DVD forum (for example, the HD DVD-Video format or HD DVD-Video Recording format).

Although no twin format disk is available in the existing DVD, twin format disks will possibly be available in the next-generation HD DVD. Therefore, BCA configured to be capable of having a twin information flag written in it holds a major significant for a recordable multilayer (two-layer) optical disk (or next-generation HD DVD disk) according to the embodiment.

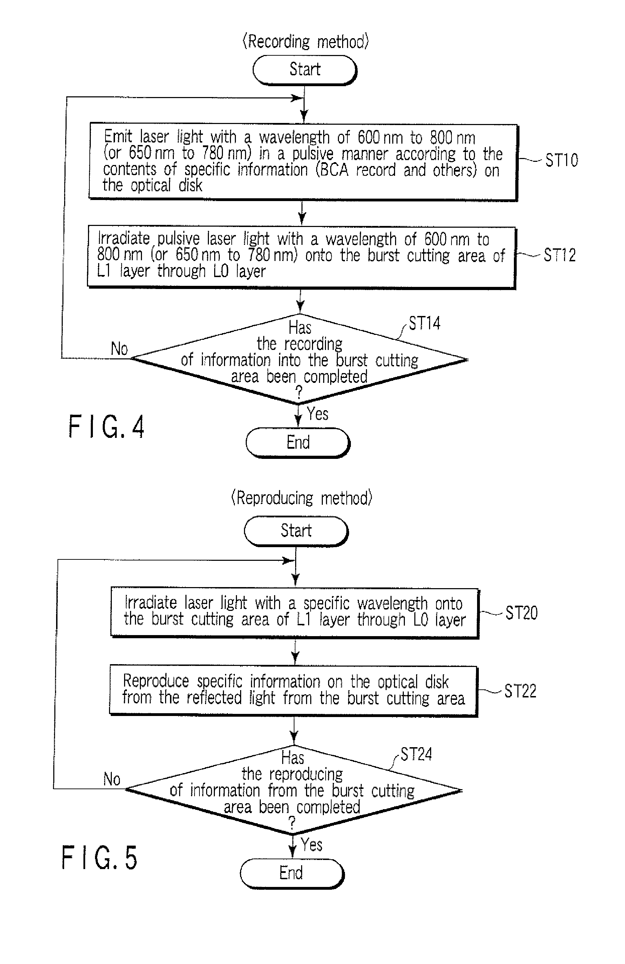

FIG. 3 is a diagram showing an example of the configuration of an apparatus which records specific information including the BCA record and others of FIGS. 2A and 2B into the BCA of FIG. 1. The BCA recording apparatus records a BCA signal (a signal including information on the BCA record and others of FIGS. 2A and 2B) into a finished disk 100. A laser 210 is modulated according to a BCA signal from a controller 202, thereby recording a bar-code-like BCA mark in synchronization with the rotation of the disk 100. A wavelength in the range of 600 to 800 nm (generally, 650 to 780 nm or 680 to 780 nm) is used as the laser wavelength of the BAC recording apparatus. The recording position of BAC is generally in the vicinity of an inner periphery radius of 22.2 mm to 23.1 mm in the L1 layer in the case of a two-layer optical disk. When BCA recording is done, laser light is irradiated through the L0 layer to the L1 layer. In the embodiment, the absorbance (sensitivity) at a wavelength of 650 to 780 nm (or 680 to 780 nm) is adjusted (sensitivity of L1 layer > sensitivity of L0 layer). Practically, it is possible to selectively record the BCA signal only into the L1 layer.

As described above, adjusting the sensitivity (or the absorbance at the wavelength used) of the pigment in each layer enables the BCA signal to be recorded into a next-generation optical disk, while keeping unchanged the laser wavelength and laser power of the BCA recording apparatus generally used in the existing DVD manufacturing line. Since the BCA signal can be selectively recorded only into the L1 layer, there is no unwanted crosstalk noise from the L0 layer in reproduction.

Specifically, in the embodiment, the sensitivity of the pigment of each layer (such as L0 or L1) is adjusted (for example, such organic material is used as makes the sensitivity or absorbance of the pigment in the L1 layer at 600 to 800 nm or 650 to 780 nm or 680 to 780 nm higher than the sensitivity or absorbance of the pigment in the L0 layer). By doing this, while the laser wavelength and laser power of the BCA recording apparatus generally used in the existing DVD manufacturing line are being kept unchanged, the BCA signal can be recorded onto a next-generation optical disk (such as a single-sided two-layer HD DVD-R). In that case, since the BCA information can be selectively recorded only into the L1 layer, there is no crosstalk from unwanted crosstalk noise from the L0 layer in reproducing the BCA signal.

FIG. 4 is a flowchart to help explain an example of the procedure for recording specific information (or post-cutting BCA) into the L1 layer of the recordable single-sided multilayer (two-layer) optical disk of FIG. 1. When the BCA signal including specific information on the BCA record and others of FIGS. 2A and 2B is supplied from the controller 202 of FIG. 3 to a laser output control section 208, a laser diode 210 emits laser light with a wavelength of 600 to 800 nm (or 650 to 780 nm or 680 to 780 nm) in a pulsive manner according to the contents of the signal (ST10). The laser light pulse emitted this way is irradiated onto the BCA recording position in the L1 layer through the L0 layer of the disk 100 of FIG. 1 (ST12). This irradiation is continued in synchronization with the rotation of the disk 100. When the recording information for BCA has run out (YES in ST14), the post-cutting of BCA into the L1 layer through the L0 layer is completed.

FIG. 5 is a flowchart to help explain an example of the procedure for reproducing specific information from the L1 layer of the recordable single-sided multilayer (two-layer) optical disk of FIG. 1. When the information recorded in BCA is reproduced, laser light with a specific wavelength (e.g., 405 or 650 nm) is irradiated through the L0 layer onto BCA in the layer L1 (ST20). From the reflected light, specific information (including the BCA record and others of FIGS. 2A and 2C) on the optical disk is read (ST22). The reading is continued in synchronization with the rotation of the disk 100. When the information read from BCA has run out (YES in ST24), the reproduction of BCA from the L1 layer through the L0 layer is completed.

FIG. 6 is a diagram to help explain an example of the process of manufacturing a recordable single-sided two-layer optical disk according to the embodiment. A method of forming the two-layer recordable optical disk will be described with reference to FIG. 6. First, a L0 layer forming plate is produced by injection molding (block 0301). The forming material is generally polycarbonate. A stamper used as a mold for forming the L0 layer is produced by nickel-plating a photoresist pattern exposed to laser light. The forming plate has a diameter of 120 mm, an inside diameter of 15 mm, and a thickness of 0.6 mm. Organic pigment material to make a recording layer is applied to the forming plate by a known spin coat method and then forming a metal film (e.g., silver or silver alloy) acting as a reflecting film by known sputtering techniques (block 0302). The L0 layer is translucent to allow laser light to pass through.

In parallel with this, a plastic stamper serving as a L1 layer mold is produced by injection molding in the same manner (block 0303). The forming material is generally cycloolefin polymer and may be polycarbonate or acrylic. An L1 layer Ni stamper is produced by nickel-plating a photoresist pattern exposed to laser light. The concavity and convexity of the pattern are made opposite to those of the L0 layer.

The L0 layer forming plate on which a recording layer has been formed is laminated to the plastic stamper with photopolymer and ultraviolet light is irradiated onto the lamination for hardening (block 0304). Thereafter, the plastic stamper is peeled, thereby exposing the photopolymer layer to which the L1 layer pattern has been transferred (block 0305). Next, to the L1 layer photopolymer, organic pigment material to make a recording layer is applied by a spin coat method and then a metal film (e.g., silver or silver alloy) to make a reflecting film is formed by sputtering techniques (block 0306).

In parallel with this, a dummy plate (whose material is polycarbonate or the like) is produced by injection molding (block 0307). This is laminated to the resulting lamination with a UV cure adhesive, thereby producing a finished two-layer recordable optical disk (block 0308). Although not shown, user printing surface coating may be applied to the dummy plate by means of an inkjet printer or the like. Alternatively, a pattern of the disk manufacturer's (distributor's) brand name, product name, or the like may be added to the dummy plate.

FIG. 7 is a diagram to help explain the way a BCA pigment material for the L1 layer is obtained by mixing a suitable amount of CD-R/DVD-R pigment material into L0-layer pigment material and further shows the relationship between the absorbance and wavelength of organic pigment material to be used for the L0 layer and L1 layer.

As an example, a graph of the absorbent characteristic of pigment suitable for the inner layer (L1) in which BCA information is to be recorded is shown. Since the pigment shown in FIG. 7 is a pigment for a next-generation optical disk (such as BD or HD DVD) which records and reproduces data at a wavelength of 405 nm, it naturally has sensitivity at about 405 nm. In addition to this, as shown in graph D of FIG. 7, it is allowed to have a little recording sensitivity in the range of 680 to 780 nm (or 650 to 780 nm or 600 to 800 nm), the laser wavelengths a general BCA recording apparatus has. Using in BCA an organic pigment material having sensitivity at the laser wavelength used enables BCA information to be recorded into the inner layer (L1) through the front layer (L0). On the other hand, the recording sensitivity of the pigment in the front layer (L0) is decreased relatively in the range of 680 to 780 nm (or 650 to 780 nm or 600 to 800 nm). By doing this, it is possible to selectively record BCA only into the inner layer (L1).

### <About L1 layer pigment material caused to have sensitivity in the range of 600 to 800 nm for BCA recording>

Since a recordable multilayer optical disk of the embodiment is a disk into and from which data is recorded and reproduced at a wavelength of 405 nm, organic pigment material having absorbance at a wavelength of 405 nm is used in both the L0 layer and L1 layer. Moreover, the pigment in the L1 layer is caused to have absorbance also in the range of 600 to 800 nm so as to be capable of doing BCA recording with laser light with a wavelength in the range of 600 to 800 nm. For example, what is obtained by mixing the L0 pigment presenting light absorption only at a wavelength of 405 nm (graph A where absorbance is low or practically naught in the range of 600 to 800 nm) with a pigment presenting light absorption in the range of 600 to 800 nm (graph D) is set as an L1 layer pigment.

Although such a mixed pigment (graph D) is used only in the BCA recording place of the L1 layer, it may be used in the entire L1 layer to simplify the manufacturing processes (and therefore lower the unit cost of mass-produced disks). When the mixed pigment (graph D) is used in the entire L1 layer, not only can BCA be recorded into or reproduced from the L1 layer through the L0 layer, but also the data area in the L1 layer is compatible with both high-density recording with blue-based laser light and (relatively) low-density recording with red-based laser light.

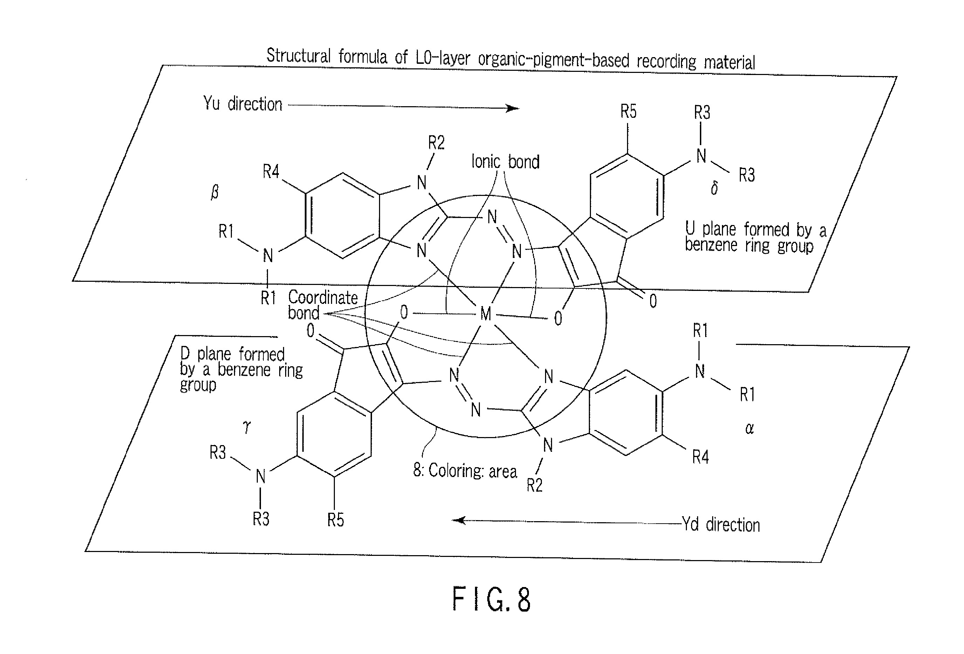

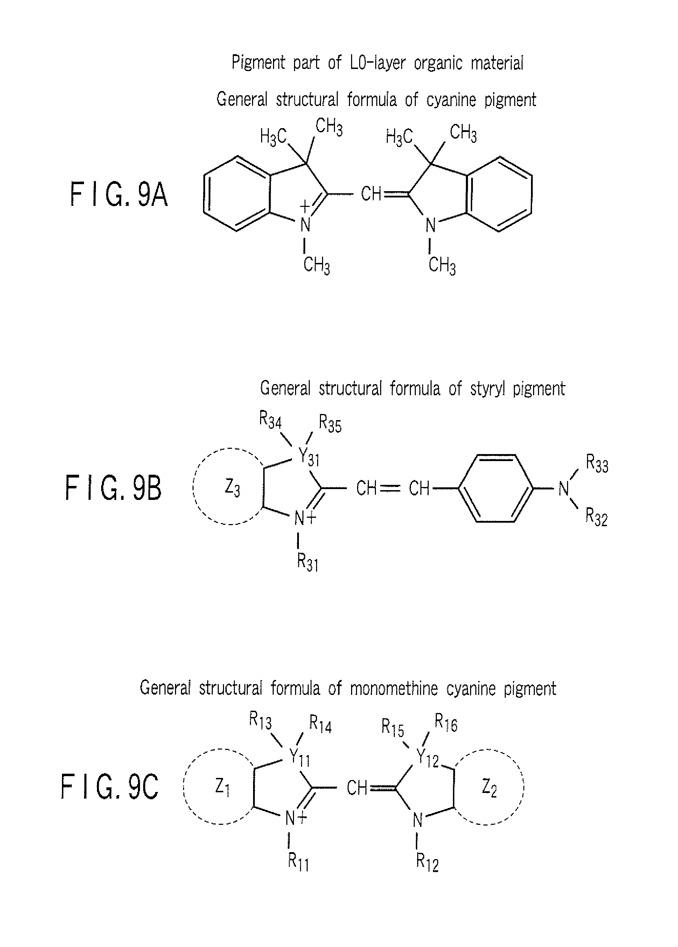

FIG. 8 shows a concrete example of a metal-complex part of the L0-layer organic material. FIGS. 9A, 9B, and 9C show concrete examples of pigment parts of the L0-layer organic material. A circular peripheral area centering on central metal M of an azo metal complex shown in FIG. 8 is a coloring area 8. When laser light passes through the coloring area 8, localized electrons in the coloring area 8 resonate with a change in the electric field of laser light, thereby absorbing the energy of the laser light. The frequency of a change in the electric field at which the localized electrons resonate most and absorb energy easily is converted into the wavelength of the laser light, which is represented as the maximum absorption wavelength λmax. As the coloring area 8 (resonance range) as shown in FIG. 8 gets longer, the maximum absorption wavelength λmax shifts more toward a longer wavelength. Changing the atom of the central metal M in FIG. 8 results in a change in the localization range of localized electrons around the central metal M (or the number of localized electrons the central metal M attracts toward the center) and therefore a change in the value of the maximum absorption wavelength λmax. For example, selecting a material whose λmax is about 405 nm makes it possible to obtain an organic material having sensitivity (or light absorption) at a wavelength of 405 nm.

As an L0 layer pigment material which absorbs light at a wavelength of 405 nm, an organic pigment material having a structure obtained by combining an organic metal-complex part whose general structural formula is shown in FIG. 8 with pigment material parts shown in FIGS. 9A, 9B, and 9C can be used. As the central metal M of the organic metal complex, cobalt or nickel can be generally used. (Alternatively, scandium, yttrium, titanium, zirconium, hafnium, vanadium, niobium, tantalum, chromium, molybdenum, tungsten, manganese, technetium, rhenium, iron, ruthenium, osmium, rhodium, iridium, palladium, platinum, copper, silver, gold, zinc, cadmium, mercury, or the like may be used). Moreover, as the pigment material part, cyanine pigment whose general structural formula is shown in FIG. 9A, styryl pigment whose general structural formula is shown in FIG. 9B, and monomethine cyanine pigment whose general structural formula is shown in FIG. 9C can be used.

Furthermore, as the L1 layer pigment material which presents light absorption not only at a wavelength of 405 nm (or 450 nm or less) but also in the range of 600 to 800 nm (or 650 to 780 nm or 680 to 780 nm), the following can be used: the L0 layer pigment material is mixed with a CD-R or DVD-R pigment which presents light absorption in the wavelength range of 600 to 800 nm (or 650 to 780 nm or 680 to 780 nm). This enables the pigment material to present light absorption in the wavelength range of 600 to 800 nm (or 650 to 780 nm or 680 to 780 nm) used in BAC recording in addition to light absorption at a wavelength of 405 nm in data recording. Therefore, as a CD-R or DVD-R pigment to be mixed, such organic pigment material as azo pigment, cyanine pigment, or phthalocyanine pigment is used. Its practical mixed quantity is, for example, about 10 wt.%.

### <Summarization>

(1) The invention can be practiced in an optical disk (100) where a plurality of recording layers are stacked one on top of another, each recording layer being recorded into and reproduced from with light whose wavelength is in the range from blue-violet to blue (450 nm or less, for example, 405 ± 15 nm). If a front layer is an L0 layer and an inner layer is an L1 layer when viewed from the light entrance surface, the optical disk is so configured that the absorbance of the L1 layer (graph D in FIG. 7) in the wavelength range of 600 to 800 nm (or 650 to 780 nm or 680 to 780 nm) is higher than that of the L0 layer (graph A in FIG. 7).
(2) The L1 layer can have a burst cutting area (BCA) in which specific information is recorded with light whose wavelength is in the range of 600 to 800 nm (or 650 to 780 nm or 680 to 780 nm) in an area closer to the inner edge of the disk than a data area in which information is recorded with light whose wavelength is 450 nm or less. A first organic material (pigment) having a high absorbance to light whose wavelength is in the range of 600 to 800 nm (or 650 to 780 nm or 680 to 780 nm) can be used for the burst cutting area. A second organic material (pigment) having a relatively low absorbance to light whose wavelength is in the range of 600 to 800 nm (or 650 to 780 nm or 680 to 780 nm) can be used for the L0 layer overlapping with the burst cutting area.
(3) The second organic material (pigment) can be used for the data area of the L0 layer and/or the data area of the L1 layer.
(4) An organic material whose absorbance in the wavelength range of 600 to 800 nm (or 650 to 780 nm or 680 to 780 nm) is equal to or more than half the absorbance at a wavelength of about 405 ± 15 nm can be used as the first organic material (pigment) used for the L1 layer. By doing this, a BCA reproduced signal in recording BCA information into the L1 layer and reproducing the information can be made sufficiently larger than a crosstalk signal from the L0 layer.
(5) The first organic material used in the burst cutting area of the L1 layer can be composed of an organic metal complex including central metal M, a first organic pigment having sensitivity to light whose wavelength is about 405 ± 15 nm, and a second organic pigment having sensitivity to light whose wavelength is in the range of 600 to 800 nm (or 650 to 780 nm or 680 to 780 nm). The central metal M can include cobalt or nickel. The first organic pigment can include cyanine pigment, styryl pigment, or monomethine cyanine pigment. The second organic pigment (the mixing ratio of the second organic pigment to the first organic pigment is about 10 wt.%) can include azo pigment, cyanine pigment, or phthalocyanine pigment.
(6) An organic material whose absorbance in the wavelength range of 600 to 800 nm (or 650 to 780 nm or 680 to 780 nm) is equal to or less than half the absorbance at a wavelength of about 405 ± 15 nm can be used as the second organic material (pigment) used for the L0 layer. By doing this, it is possible to cause such a change as deteriorates the BCA reproduced signal to hardly occur on the L0 layer in recording BCA information into the L1 layer through the L0 layer.
(7) The second organic material used for the L0 layer can be composed of an organic metal complex including central metal M and an organic pigment having sensitivity to light whose wavelength is about 405 ± 15 nm. The central metal M can include cobalt or nickel. The organic pigment can include cyanine pigment, styryl pigment, or monomethine cyanine pigment.
(8) An information recording method according to the embodiment is to irradiate laser light whose wavelength is in the range of 600 to 800 nm (or 650 to 780 nm or 680 to 780 nm) onto the burst cutting area of the L1 layer through the L0 layer in the optical disk, thereby recording specific information on the optical disk into the burst cutting area.
(9) An information reproducing method according to the embodiment is to irradiate laser light onto the burst cutting area of the L1 layer through the L0 layer in the optical disk, thereby reproducing specific information on the optical disk from the burst cutting area.
(10) An information recording apparatus of the embodiment which records information onto the optical disk can have means (202) for generating specific information to be recorded into the burst cutting area and means (204 to 208) for recording the specific information (such as BCA records) into the burst cutting area (BCA) of L1 layer through the L0 layer using laser light (210) whose wavelength is in the range of 600 to 800 nm (or 650 to 780 nm or 680 to 780 nm) .

This invention is not limited to the above embodiments and, on the basis of available skills in the present or future implementation phase, may be practiced or embodied in still other ways without departing from the spirit or character thereof. For instance, a recording layer having a high sensitivity to blue laser light may be provided in a place 0.1 mm deeper than the light-receiving surface (or disk surface), another recording layer having a high sensitivity to blue laser light may be provided in a place about 0.6 mm deeper than the light-receiving surface, and a recording layer with a BCA recording area having a high sensitivity to red laser light may be provided in a place much deeper than the preceding recording layer (an organic material having a high sensitivity to blue laser light is used for a data recording area).

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. In an optical disk where a plurality of recording layers are stacked one on top of another, each recording layer being recorded into and reproduced from with light whose wavelength is in the range from blue-violet to blue, a recordable multilayer optical disk (100) being so configured that, if a front layer is an L0 layer (L0) and an inner layer is an L1 layer (L1) when viewed from the light entrance surface, the absorbance of the L1 layer (L1) in the wavelength range of 600 to 800 nm is higher than that of the L0 layer (L0).

2. The optical disk according to claim 1, **characterized in that** the L1 layer (L1) has a burst cutting area (BCA) in which specific information is recorded with light whose wavelength is in the range of 600 to 800 nm in an area closer to the inner edge of the disk (100) than a data area in which information is recorded with light whose wavelength is 450 nm or less,
a first organic material (306) having a high absorbance to light whose wavelength is in the range of 600 to 800 nm is used for the burst cutting area (BCA), and
a second organic material (302) having a relatively low absorbance to light whose wavelength is in the range of 600 to 800 nm is used for the L0 layer overlapping with the burst cutting area (BCA).

3. The optical disk according to claim 2, **characterized in that** the first organic material (306) is used for the burst cutting area (BCA) of the L1 layer (L1) or both the burst cutting area (BCA) and the data area of the L1 layer (L1).

4. The optical disk according to claim 2, **characterized in that** an organic material whose absorbance in the wavelength range of 600 to 800 nm is equal to or more than half the absorbance at a wavelength of about 405 nm is used as the first organic material (306) used for the L1 layer (L1).

5. The optical disk according to claim 3, **characterized in that** an organic material whose absorbance in the wavelength range of 600 to 800 nm is equal to or more than half the absorbance at a wavelength of about 405 nm is used as the first organic material (306) used for the L1 layer (L1).

6. The optical disk according to claim 4, **characterized in that** the first organic material (306) used for the burst cutting area (BCA) of the L1 layer (L1) is composed of an organic metal complex including central metal M, a first organic pigment having sensitivity to light whose wavelength is about 405 nm, and a second organic pigment having sensitivity to light whose wavelength is in the range of 600 to 800 nm,
the central metal M includes cobalt or nickel,
the first organic pigment includes cyanine pigment, styryl pigment, or monomethine cyanine pigment, and
the second organic pigment includes azo pigment, cyanine pigment, or phthalocyanine pigment.

7. The optical disk according to claim 5, **characterized in that** the first organic material (306) used for the burst cutting area (BCA) of the L1 layer (L1) is composed of an organic metal complex including central metal M, a first organic pigment having sensitivity to light whose wavelength is about 405 nm, and a second organic pigment having sensitivity to light whose wavelength is in the range of 600 to 800 nm,
the central metal M includes cobalt or nickel,
the first organic pigment includes cyanine pigment, styryl pigment, or monomethine cyanine pigment, and
the second organic pigment includes azo pigment, cyanine pigment, or phthalocyanine pigment.

8. The optical disk according to claim 2, **characterized in that** an organic material whose absorbance in the wavelength range of 600 to 800 nm is equal to or less than half the absorbance at a wavelength of about 405 nm is used as the second organic material (302) used for the L0 layer (L0).

9. The optical disk according to claim 3, **characterized in that** an organic material whose absorbance in the wavelength range of 600 to 800 nm is equal to or less than half the absorbance at a wavelength of about 405 nm is used as the second organic material (302) used for the L0 layer (L0).

10. The optical disk according to claim 8, **characterized in that** the second organic material (302) used for the L0 layer (L0) is composed of an organic metal complex including central metal M and an organic pigment having sensitivity to light whose wavelength is about 405 nm,
the central metal M includes cobalt or nickel, and
the organic pigment includes cyanine pigment, styryl pigment, or monomethine cyanine pigment.

11. The optical disk according to claim 9, **characterized in that** the second organic material (302) used for the L0 layer (L0) is composed of an organic metal complex including central metal M and an organic pigment having sensitivity to light whose wavelength is about 405 nm,
the central metal M includes cobalt or nickel, and
the organic pigment includes cyanine pigment, styryl pigment, or monomethine cyanine pigment.

12. In a recordable multilayer optical disk, where a plurality of recording layers are stacked one on top of another, each recording layer being recorded into and reproduced from with light whose wavelength is in the range from blue-violet to blue, being so configured that, if a front layer (101) is an L0 layer (L0) and an inner layer (102) is an L1 layer (L1) when viewed from the light entrance surface, the absorbance of the L1 layer (L1) in the wavelength range of 600 to 800 nm is higher than that of the L0 layer (L0), **characterized in that** the L1 layer (L1) has a burst cutting area (BCA) in which specific information is recorded with light whose wavelength is in the range of 600 to 800 nm in an area closer to the inner edge of the disk (100) than a data area in which information is recorded with light whose wavelength is 450 nm or less, a first organic material (306) having a high absorbance to light whose wavelength is in the range of 600 to 800 nm is used for the burst cutting area (BCA), and a second organic material (302) having a relatively low absorbance to light whose wavelength is in the range of 600 to 800 nm is used for the L0 layer (L0) overlapping with the burst cutting area (BCA),
an information recording method comprising irradiating laser light whose wavelength is in the range of 600 to 800 nm onto the burst cutting area (BCA) of the L1 layer (L1) through the L0 layer (L0) in the optical disk (ST12) and thereby recording specific information on the optical disk (100) into the burst cutting area (BCA) (ST14).

13. In a recordable multilayer optical disk, where a plurality of recording layers are stacked one on top of another, each recording layer being recorded into and reproduced from with light whose wavelength is in the range from blue-violet to blue, being so configured that, if a front layer (101) is an L0 layer (L0) and an inner layer (102) is an L1 layer (L1) when viewed from the light entrance surface, the absorbance of the L1 layer (L1) in the wavelength range of 600 to 800 nm is higher than that of the L0 layer (L0), **characterized in that** the L1 layer (L1) has a burst cutting area (BCA) in which specific information is recorded with light whose wavelength is in the range of 600 to 800 nm in an area closer to the inner edge of the disk (100) than a data area in which information is recorded with light whose wavelength is 450 nm or less, a first organic material (306) having a high absorbance to light whose wavelength is in the range of 600 to 800 nm is used for the burst cutting area (BCA), and a second organic material (302) having a relatively low absorbance to light whose wavelength is in the range of 600 to 800 nm is used for the L0 layer (L0) overlapping with the burst cutting area (BCA),
an information reproducing method comprising irradiating laser light onto the burst cutting area (BCA) of the L1 layer (L1) through the L0 layer (L0) in the optical disk (100) (ST20) and thereby reproducing specific information on the optical disk (100) from the burst cutting area (BCA) (ST22).

14. In a recording apparatus which records information onto a recordable multilayer optical disk, where a plurality of recording layers are stacked one on top of another, each recording layer being recorded into and reproduced from with light whose wavelength is in the range from blue-violet to blue, being so configured that, if a front layer (101) is an L0 layer (L0) and an inner layer (102) is an L1 layer (L1) when viewed from the light entrance surface, the absorbance of the L1 layer (L1) in the wavelength range of 600 to 800 nm is higher than that of the L0 layer (L0), **characterized in that** the L1 layer (L1) has a burst cutting area (BCA) in which specific information is recorded with light whose wavelength is in the range of 600 to 800 nm in an area closer to the inner edge of the disk (100) than a data area in which information is recorded with light whose wavelength is 450 nm or less, a first organic material (306) having a high absorbance to light whose wavelength is in the range of 600 to 800 nm is used for the burst cutting area (BCA), and a second organic material (302) having a relatively low absorbance to light whose wavelength is in the range of 600 to 800 nm is used for the L0 layer (L0) overlapping with the burst cutting area (BCA),
the recording apparatus comprising:
means for generating specific information to be recorded into the burst cutting area (BCA) (202), and
means for recording the specific information into the burst cutting area (BCA) of L1 layer (L1) through the L0 layer (L0) using laser light whose wavelength is in the range of 600 to 800 nm (210).
